# EUROPÄISCHE PATENTSCHRIFT

(11) **EP 3 652 504 B1**
(45) Veröffentlichungstag und Bekanntmachung des Hinweises auf die Patenterteilung: **28.07.2021**
(21) Anmeldenummer: 18728366.8
(22) Anmeldetag: 30.05.2018
(51) Int. Cl.: G01N 27/12, G01N 27/22, G01F 1/28, G01F 1/56

(54) **VORRICHTUNG MIT SENSOREN ZUM AUFNEHMEN VON MESSGRÖSSEN EINES FLUIDS, INSBESONDERE ZUM ANORDNEN IN EINER FLUIDLEITUNG**
DEVICE HAVING SENSORS FOR SENSING MEASUREMENT VARIABLES OF A FLUID, IN PARTICULAR FOR ARRANGING IN A FLUID LINE
DISPOSITIF DOTÉ DE CAPTEURS POUR ENREGISTRER DES GRANDEURS DE MESURE D'UN FLUIDE, DESTINÉ EN PARTICULIER À ÊTRE MONTÉ DANS UNE CONDUITE DE FLUIDE

(30) Priorität: 12.07.2017 DE 102017115694
(43) Veröffentlichungstag der Anmeldung: 20.05.2020
(73) Patentinhaber: Grohe AG, 58653 Hemer (DE)
(72) Erfinder: RICHARD, Thilo, 44267 Dortmund (DE)
(86) Internationale Anmeldenummer: PCT/EP2018/064187
(87) Internationale Veröffentlichungsnummer: WO 2019/011520

(56) Entgegenhaltungen:
- WO-A1-2014/153547
- DE-A1- 3 616 777
- DE-A1-102015 011 755
- US-A- 5 663 508

## Beschreibung

Die vorliegende Erfindung betrifft eine Vorrichtung, beinhaltend
a) einen ersten Sensor, ausgebildet und angeordnet zum Aufnehmen einer ersten Messgröße eines Fluids, und
b) einen zweiten Sensor, ausgebildet und angeordnet zum Aufnehmen einer zweiten Messgröße des Fluids;
wobei die Vorrichtung
a. eine erste Elektrodenanordnung, beinhaltend
   i) ein Substrat, und
   ii) eine das Substrat überlagernde erste flächenförmige Elektrode, und
b. eine zweite Elektrodenanordnung, beinhaltend eine zweite flächenförmige Elektrode,
beinhaltet; wobei die erste flächenförmige Elektrode und die zweite flächenförmige Elektrode dielektrisch voneinander beabstandet sind; wobei die erste Elektrodenanordnung und die zweite Elektrodenanordnung einen ersten Kondensator als den ersten Sensor derart bilden, dass eine durch die erste flächenförmige Elektrode und die zweite flächenförmige Elektrode gebildete erste Kapazität unter einer Einwirkung eines Fluids und in Abhängigkeit einer Strömungsgeschwindigkeit des Fluids als der ersten Messgröße veränderlich ist; wobei die erste Elektrodenanordnung den zweiten Sensor beinhaltet. Ferner betrifft die Erfindung eine Messeinrichtung, beinhaltend die Vorrichtung; eine Sanitärarmatur, beinhaltend die Vorrichtung oder die Messeinrichtung; und eine Verwendung der Vorrichtung in einer Fluidleitung.

Verschiedene Anwendungen erfordern ein Erfassen von Messgrößen im Sanitärbereich. Beispielhafte Anwendungen sind hierbei die Regelung, Kalibrierung oder auch Programmierung elektronischer Sanitäreinrichtungen wie beispielsweise elektronischer Armaturen. Ferner ist eine Datenerfassung auch von Sanitäreinrichtungen für Smart Home-Anwendungen - also für Systeme von Wohneinrichtungen mit vernetzten Geräten und Einrichtungen wie beispielsweise Haustechnik, Haushaltsgeräten und Unterhaltungselektronikgeräten - wünschenswert. Im Stand der Technik sind für die Datenerfassung im Sanitärbereich unterschiedliche Sensoren, die als Einzelkomponenten vorliegen, erforderlich. Werden diese Einzelkomponenten verbaut, ergibt sich häufig ein voluminöser Aufbau, der so nicht gewünscht, nicht umsetzbar, oder zu kostenintensiv ist. Insbesondere kann ein solcher Aufbau deshalb nicht umsetzbar sein, weil die Einzelkomponenten nicht alle in der vorgesehenen Wasserführung oder der Sanitäreinrichtung unterbringbar sind.

Allgemein ist es eine Aufgabe der vorliegenden Erfindung, einen Nachteil, der sich aus dem Stand der Technik, wie zum Beispiel aus Dokument WO 2014/153547 A1, ergibt, zumindest teilweise zu überwinden. Eine weitere Aufgabe der Erfindung ist es, eine Vorrichtung bereitzustellen, die ein Aufnehmen von mindestens zwei Messgrößen eines Wasserdurchflusses ermöglicht und hierzu in einer Wasserleitung oder einer Sanitäreinrichtung angeordnet werden kann. Besonders bevorzugt kann die erfindungsgemäße Vorrichtung in einer Hauswasserleitung oder einem Strang einer solchen oder unmittelbar vor einer Sanitärarmatur angeordnet werden. Hierzu weist die Vorrichtung gegenüber vergleichbaren Vorrichtungen des Stands der Technik vorzugsweise eine verringerte Größe auf. Ein weitere Aufgabe der Erfindung ist es, die vorgenannte vorteilhafte Vorrichtung bereitzustellen, wobei diese sich zu einer Anwendung ausgewählt aus der Gruppe bestehend aus einer Verbrauchsmessung; einer Temperaturüberwachung, beispielsweise für einen Frostschutz oder einen Verbrühschutz oder beides; einer automatischen Kalibrierung einer elektronischen Armatur; einer Kalibrierung eines Warmwassererzeugers; einer Leckageerkennung; einer Kalibrierung einer Wasserversorgung, beispielsweise einer Pumpe; einer Anwesenheitserkennung; und einem Erstellen eines Nutzungsprofils, beispielsweise für eine zeitgesteuerte Warmwasserbereitstellung; oder für eine Kombination aus mindestens zwei der vorgenannten Anwendungen eignet. Ferner ist es eine Aufgabe der Erfindung, eine Vorrichtung bereitzustellen, die ein Aufnehmen von mindestens zwei Messgrößen eines Wasserdurchflusses ermöglicht und kostengünstiger herstellbar ist.

Ein Beitrag zur mindestens teilweisen Erfüllung mindestens einer der zuvor genannten Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zur Erfüllung mindestens einer der erfindungsgemäßen Aufgaben leistet eine Ausführungsform 1 einer Vorrichtung, beinhaltend
a) einen ersten Sensor, ausgebildet und angeordnet zum Aufnehmen einer ersten Messgröße eines Fluids, und
b) einen zweiten Sensor, ausgebildet und angeordnet zum Aufnehmen einer zweiten Messgröße des Fluids;
wobei die Vorrichtung
a. eine erste Elektrodenanordnung, beinhaltend
   i) ein Substrat, und
   ii) eine das Substrat überlagernde erste flächenförmige Elektrode, und
b. eine zweite Elektrodenanordnung, beinhaltend eine zweite flächenförmige Elektrode,
beinhaltet; wobei die erste flächenförmige Elektrode und die zweite flächenförmige Elektrode dielektrisch voneinander beabstandet sind; wobei die erste Elektrodenanordnung und die zweite Elektrodenanordnung einen ersten Kondensator als den ersten Sensor derart bilden, dass eine durch die erste flächenförmige Elektrode und die zweite flächenförmige Elektrode gebildete erste Kapazität unter einer Einwirkung eines Fluids und in Abhängigkeit einer Strömungsgeschwindigkeit des Fluids als der ersten Messgröße veränderlich ist; wobei die erste Elektrodenanordnung den zweiten Sensor beinhaltet. Bevorzugt sind die erste flächenförmige Elektrode und die zweite flächenförmige Elektrode um weniger als 10 cm, bevorzugter weniger als 5 cm, bevorzugter weniger als 3 cm, bevorzugter weniger als 1 cm, am bevorzugtesten weniger als 5 mm, dielektrisch voneinander beabstandet. Für den Gebrauch in diesem Dokument überlagert eine Komponente eine andere, wenn die Komponenten in einer Richtung aufeinander folgen. Hierbei können die beiden Komponenten mittelbar oder unmittelbar aufeinander folgen, d.h. die beiden Komponenten können direkt aneinander angrenzen oder es kann sich eine oder mehrere weitere Komponenten zwischen den beiden Komponenten befinden. Überlagert eine Komponente eine andere, so sind diese beiden Komponenten jedoch bevorzugt mittelbar oder unmittelbar miteinander verbunden.

In einer erfindungsgemäßen Ausführungsform 2 ist die Vorrichtung nach der Ausführungsform 1 ausgestaltet, wobei die Vorrichtung dazu ausgebildet ist, in einer zu einem Leiten des Fluids ausgebildeten Fluidleitung angeordnet zu werden. Hierzu ist die Vorrichtung vorzugsweise so dimensioniert, dass sie in die Fluidleitung eingeführt werden kann. Eine bevorzugte Fluidleitung ist rohrförmig ausgebildet. Eine bevorzugte rohrförmige Fluidleitung ist ein Wasserrohr, beispielsweise einer Hauswasserleitung oder einer Trinkwasserleitung oder beides. Bevorzugt hat die rohrförmige Fluidleitung einen Innendurchmesser in einem Bereich von 5 mm bis 50 cm, bevorzugter von 5 mm bis 30 cm, am bevorzugtesten von 1 cm bis 20 cm.

In einer erfindungsgemäßen Ausführungsform 3 ist die Vorrichtung nach der Ausführungsform 2 ausgestaltet, wobei die Fluidleitung von einer Sanitäreinrichtung beinhaltet ist. Eine bevorzugte von einer Sanitäreinrichtung beinhaltete Fluidleitung ist ein Wasserweg der Sanitäreinrichtung.

In einer erfindungsgemäßen Ausführungsform 4 ist die Vorrichtung nach einer der vorhergehenden Ausführungsformen ausgestaltet, wobei die zweite Messgröße eine Temperatur des Fluids oder ein Druck des Fluids oder beides ist. Demnach ist der zweite Sensor bevorzugt ein Temperatursensor oder ein Drucksensor oder beides. In dem Fall, dass der zweite Sensor ein Drucksensor ist, beinhaltet die erste Elektrodenanordnung bevorzugt einen dritten Sensor, der ein Temperatursensor ist. In dem Fall, dass der zweite Sensor ein Temperatursensor ist, beinhaltet die erste Elektrodenanordnung bevorzugt einen dritten Sensor, der ein Drucksensor ist. In einer erfindungsgemäßen Ausführungsform 5 ist die Vorrichtung nach einer der vorhergehenden Ausführungsformen ausgestaltet, wobei das Substrat den zweiten Sensor mindestens teilweise umschließt. Hierzu ist der zweite Sensor bevorzugt mindestens teilweise in dem Substrat eingegossen. Hierbei ist der zweite Sensor bevorzugt ein Temperatursensor. Demnach ist die zweite Messgröße bevorzugt eine Temperatur des Fluids.

In einer erfindungsgemäßen Ausführungsform 6 ist die Vorrichtung nach einer der Ausführungsformen 1 bis 4 ausgestaltet, wobei das Substrat auf einer von der ersten flächenförmigen Elektrode abgewandten Seite mit mindestens einer elektrischen Leiterbahn überlagert ist; wobei der zweite Sensor
A. das Substrat auf der von der ersten flächenförmigen Elektrode abgewandten Seite überlagert, und
B. elektrisch leitend mit der mindestens einen elektrischen Leiterbahn verbunden ist.
Vorzugsweise ist das Substrat auf der von der ersten flächenförmigen Elektrode abgewandten Seite mit mindestens zwei elektrischen Leiterbahnen überlagert, wobei der zweite Sensor mit den mindestens zwei elektrischen Leiterbahnen elektrisch leitend verbunden ist. Gemäß dieser Ausführungsform ist bevorzugt das Substrat elektrisch isolierend ausgebildet oder die mindestens eine elektrische Leiterbahn elektrisch von dem Substrat isoliert. Zum elektrischen Isolieren der mindestens einen elektrischen Leiterbahn von dem Substrat kann sich zwischen der mindestens einen elektrischen Leiterbahn und dem Substrat eine elektrisch isolierende Schicht, beispielsweise aus Kunststoff, befinden. Ferner ist der zweite Sensor bevorzugt ein Temperatursensor. Demnach ist die zweite Messgröße bevorzugt eine Temperatur des Fluids. Hier ist der Temperatursensor bevorzugt als Halbleiter-Temperatursensor oder als Transistor oder beides ausgebildet. Ein bevorzugter Transistor ist als Diode geschaltet.

In einer erfindungsgemäßen Ausführungsform 7 ist die Vorrichtung nach einer der Ausführungsformen 5 oder 6 ausgestaltet, wobei die Vorrichtung einen dritten Sensor, ausgebildet und angeordnet zum Aufnehmen einer dritten Messgröße des Fluids, beinhaltet; wobei die erste Elektrodenanordnung eine das Substrat auf einer von der ersten flächenförmigen Elektrode abgewandten Seite überlagernde dritte flächenförmige Elektrode beinhaltet; wobei das Substrat die erste flächenförmige Elektrode und die dritte flächenförmige Elektrode dielektrisch voneinander beabstandet; wobei die erste Elektrodenanordnung einen zweiten Kondensator als den dritten Sensor bildet; wobei die erste flächenförmige Elektrode und die dritte flächenförmige Elektrode eine zweite Kapazität des zweiten Kondensators bilden; wobei das Substrat so angeordnet und ausgebildet ist, dass die zweite Kapazität unter der Einwirkung des Fluids und in Abhängigkeit eines Drucks des Fluids als der dritten Messgröße veränderlich ist. Hierbei ist der dritte Sensor bevorzugt ein Drucksensor. In einer bevorzugten Ausführungsform ist das Substrat flexibel ausgebildet, damit die zweite Kapazität unter der Einwirkung des Fluids und in Abhängigkeit des Drucks des Fluids als der dritten Messgröße veränderlich ist. Bevorzugt beabstandet das Substrat die erste flächenförmige Elektrode und die dritte flächenförmige Elektrode dielektrisch voneinander um weniger als 10 cm, bevorzugter weniger als 5 cm, bevorzugter weniger als 3 cm, bevorzugter weniger als 1 cm, am bevorzugtesten weniger als 5 mm, voneinander.

In einer erfindungsgemäßen Ausführungsform 8 ist die Vorrichtung nach einer der Ausführungsformen 1 bis 4 ausgestaltet, wobei die erste Elektrodenanordnung eine das Substrat auf einer von der ersten flächenförmigen Elektrode abgewandten Seite überlagernde dritte flächenförmige Elektrode beinhaltet; wobei das Substrat die erste flächenförmige Elektrode und die dritte flächenförmige Elektrode dielektrisch voneinander beabstandet; wobei die erste Elektrodenanordnung einen zweiten Kondensator als den zweiten Sensor bildet; wobei die erste flächenförmige Elektrode und die dritte flächenförmige Elektrode eine zweite Kapazität des zweiten Kondensators bilden; wobei das Substrat so angeordnet und ausgebildet ist, dass die zweite Kapazität unter der Einwirkung des Fluids und in Abhängigkeit eines Drucks des Fluids als der zweiten Messgröße veränderlich ist. Hierzu ist vorzugsweise ein mittlerer Abstand zwischen der ersten flächenförmigen Elektrode und der dritten flächenförmigen Elektrode unter der Einwirkung des Fluids, insbesondere dessen Druck, veränderlich. Hierbei ist der zweite Sensor bevorzugt ein Drucksensor. In einer bevorzugten Ausführungsform ist das Substrat flexibel ausgebildet, damit die zweite Kapazität unter der Einwirkung des Fluids und in Abhängigkeit des Drucks des Fluids als der zweiten Messgröße veränderlich ist. Bevorzugt beabstandet das Substrat die erste flächenförmige Elektrode und die dritte flächenförmige Elektrode dielektrisch voneinander um weniger als 10 cm, bevorzugter weniger als 5 cm, bevorzugter weniger als 3 cm, bevorzugter weniger als 1 cm, am bevorzugtesten weniger als 5 mm, voneinander.

In einer erfindungsgemäßen Ausführungsform 9 ist die Vorrichtung nach einer der Ausführungsformen 7 oder 8 ausgestaltet, wobei das Substrat zwischen der ersten flächenförmigen Elektrode und der dritten flächenförmigen Elektrode einen Hohlraum mindestens teilweise einschließt. Hierzu beinhaltet das Substrat bevorzugt ein Loch, welches mit der ersten flächenförmigen Elektrode und der dritten flächenförmigen Elektrode jeweils mindestens teilweise überdeckt ist. Vorzugsweise weist die erste Elektrodenanordnung eine Entlüftung für den Hohlraum auf. Eine solche Entlüftung kann beispielsweise als luftleitender Kanal, beispielsweise zwischen dem Substrat und der dritten flächenförmigen Elektrode, ausgebildet sein.

In einer erfindungsgemäßen Ausführungsform 10 ist die Vorrichtung nach einer der vorhergehenden Ausführungsformen ausgestaltet, wobei die erste flächenförmige Elektrode oder die zweite flächenförmige Elektrode oder beide jeweils eine Dicke in einem Bereich von 500 nm bis 3 mm, bevorzugt von 500 nm bis 1 mm, bevorzugter von 1 µm bis 1 mm, bevorzugter von 1 µm bis 800 µm, am bevorzugtesten von 1 µm bis 500 µm, aufweist.

In einer erfindungsgemäßen Ausführungsform 11 ist die Vorrichtung nach einer der vorhergehenden Ausführungsformen ausgestaltet, wobei die erste Elektrodenanordnung und die zweite Elektrodenanordnung den ersten Kondensator als den ersten Sensor derart bilden, dass ein mittlerer Abstand zwischen der ersten flächenförmigen Elektrode und der zweiten flächenförmigen Elektrode unter der Einwirkung des Fluids und in Abhängigkeit der Strömungsgeschwindigkeit des Fluids als der ersten Messgröße veränderlich ist.

In einer erfindungsgemäßen Ausführungsform 12 ist die Vorrichtung nach einer der Ausführungsformen 1 bis 10 ausgestaltet, wobei die erste flächenförmige Elektrode eine der zweiten flächenförmigen Elektrode zugewandte erste Elektrodenfläche aufweist, wobei die zweite flächenförmige Elektrode eine der ersten flächenförmigen Elektrode zugewandte zweite Elektrodenfläche aufweist, wobei die erste Elektrodenanordnung und die zweite Elektrodenanordnung den ersten Kondensator als den ersten Sensor derart bilden, dass eine Überdeckung der ersten Elektrodenfläche durch die zweite Elektrodenfläche unter der Einwirkung des Fluids und in Abhängigkeit der Strömungsgeschwindigkeit des Fluids als der ersten Messgröße veränderlich ist.

In einer erfindungsgemäßen Ausführungsform 13 ist die Vorrichtung nach der Ausführungsform 11 oder 12 ausgestaltet, wobei die zweite flächenförmige Elektrode relativ zu der ersten flächenförmigen Elektrode beweglich ausgebildet oder ausgebildet angeordnet oder beides ist. In dem Fall, dass die zweite flächenförmige Elektrode relativ zu der ersten flächenförmigen Elektrode beweglich ausgebildet ist, ist die zweite flächenförmige Elektrode vorzugsweise durch die Einwirkung des Fluids elastisch verformbar ausgebildet. In dem Fall, dass die zweite flächenförmige Elektrode relativ zu der ersten flächenförmigen Elektrode beweglich angeordnet ist, ist die zweite flächenförmige Elektrode vorzugsweise durch die Einwirkung des Fluids verschiebbar angeordnet. Hierbei ist die zweite flächenförmige Elektrode bevorzugt durch Translation oder Rotation oder beides beweglich angeordnet. Hierzu kann die zweite Elektrodenanordnung ein Lager aufweisen, welches zum translatorischen Verschieben der zweiten flächenförmigen Elektrode oder zum Rotieren der zweiten flächenförmigen Elektrode um eine Drehachse ausgebildet ist. Hierbei weist die Vorrichtung vorzugsweise ein Rückstellelement auf, welches dazu angeordnet und ausgebildet ist, den mittleren Abstand zwischen der ersten flächenförmigen Elektrode oder die Überdeckung der ersten Elektrodenfläche durch die zweite Elektrodenfläche in eine Gleichgewichtslage zu bringen. Ein bevorzugtes Rückstellelement ist ein Federelement.

In einer erfindungsgemäßen Ausführungsform 14 ist die Vorrichtung nach einer der vorhergehenden Ausführungsformen ausgestaltet, wobei die erste flächenförmige Elektrode eine der zweiten flächenförmigen Elektrode zugewandte erste Elektrodenfläche aufweist, wobei die zweite flächenförmige Elektrode eine der ersten flächenförmigen Elektrode zugewandte zweite Elektrodenfläche aufweist, wobei die zweite Elektrodenfläche größer ist als die erste Elektrodenfläche. Hierbei wird die erste Kapazität vorzugsweise durch einander in einer Anströmrichtung des Fluids überdeckende Anteile der ersten Elektrodenfläche und der zweiten Elektrodenfläche gebildet. Die Anströmrichtung ist bevorzugt senkrecht zu einer durch die erste Elektrodenfläche oder die zweite Elektrodenfläche gebildeten Ebene.

In einer erfindungsgemäßen Ausführungsform 15 ist die Vorrichtung nach einer der vorhergehenden Ausführungsformen ausgestaltet, wobei die Vorrichtung zusätzlich einen vierten Sensor, ausgebildet und angeordnet zum Aufnehmen einer vierten Messgröße des Fluids, beinhaltet. Eine bevorzugte vierte Messgröße ist ein Gehalt eines chemischen Inhaltsstoffes des Fluids oder eines biologischen Inhaltsstoffes des Fluids oder beides. Ein bevorzugter chemischer Inhaltsstoff ist ein anorganischer Inhaltsstoff oder ein organischer Inhaltsstoff. Ein bevorzugter anorganischer Inhaltsstoff ist Kalk oder ein Metall oder beides. Ein bevorzugtes Metall ist ein Schwermetall. Hierbei ist ein Schwermetall ein Metall mit einer Dichte von mehr als 5,0 g/cm³. Beispielhafte Schwermetalle sind Blei, Cadmium, Chrom, Kobalt, Kupfer, Mangan, Molybdän, Nickel, Quecksilber, Selen, Zink, und Zinn. Ein bevorzugter biologischer Inhaltsstoff ist ein Bakterium oder ein Pilz oder beides. Bevorzugte Bakterien sind ausgewählt aus der Gruppe bestehend aus Legionellen, Salmonellen, Campylobacter, Streptokokken, und Escherichia coli, oder eine Kombination aus mindestens zwei davon.

Einen Beitrag zur Erfüllung mindestens einer der erfindungsgemäßen Aufgaben leistet eine Ausführungsform 1 einer Messeinrichtung, beinhaltend die Vorrichtung nach einem der vorhergehenden Ansprüche und eine Signalverarbeitungseinrichtung, wobei die Signalverarbeitungseinrichtung
A) dazu angeordnet und ausgebildet ist ein Messsignal der ersten Messgröße oder der zweiten Messgröße oder beider zu verarbeiten, und
B) signalübertragend mit dem ersten Sensor oder dem zweiten Sensor oder beiden verbunden ist.

Bevorzugt beinhaltet die Messeinrichtung mindestens ein Hilfsgerät. Ein bevorzugtes Hilfsgerät ist eine Spannungsquelle. Die Spannungsquelle ist vorzugweise zum Anlegen einer elektrischen Spannung zwischen der ersten flächenförmigen Elektrode und der zweiten flächenförmigen Elektrode mit diesen elektrisch leitend verbunden. Eine bevorzugte Spannungsquelle ist eine Gleichspannungsquelle oder eine Wechselspannungsquelle oder beides. Die Signalverarbeitungseinrichtung beinhaltet bevorzugt eine Datenverarbeitungseinrichtung oder ist von einer Datenverarbeitungseinrichtung beinhaltet oder ist mit einer Datenverarbeitungseinrichtung signalübertragend oder datenübertragend oder beides verbunden. Bei der Spannungsquelle kann es sich beispielsweise um ein Netzteil, welches bevorzugt einen Transformator beinhaltet, handeln.

Einen Beitrag zur Erfüllung mindestens einer der erfindungsgemäßen Aufgaben leistet eine Ausführungsform 1 einer Sanitäreinrichtung, beinhaltend die Vorrichtung nach einer ihrer Ausführungsformen 1 bis 15 oder die Messeinrichtung.

Einen Beitrag zur Erfüllung mindestens einer der erfindungsgemäßen Aufgaben leistet eine Ausführungsform 1 einer Verwendung der Vorrichtung nach einer ihrer Ausführungsformen 1 bis 15 in einer Fluidleitung.

In einer erfindungsgemäßen Ausführungsform 2 ist die Verwendung nach ihrer Ausführungsform 1 ausgestaltet, wobei die Fluidleitung von einer Sanitäreinrichtung beinhaltet ist.

In einer erfindungsgemäßen Ausführungsform 3 ist die Verwendung nach ihrer Ausführungsform 1 oder 2 ausgestaltet, wobei die Vorrichtung zu einem Einstellen einer/der Sanitäreinrichtung oder einem Überwachen der Sanitäreinrichtung oder beides verwendet wird. Ein bevorzugtes Einstellen ist ein Regeln, ein Kalibrieren oder ein Programmieren oder eine Mischung aus mindestens zwei davon. Ein bevorzugtes Einstellen ist ferner ein Einstellen eines Fluiddurchflusses oder einer Fluidabgabe oder beider der Sanitäreinrichtung, welche bevorzugt eine Armatur, bevorzugter eine elektronische Armatur, ist. Ein bevorzugtes Einstellen eines Fluiddurchflusses oder einer Fluidabgabe oder beider einer Armatur ist ein Einstellen einer Durchflussrate des Fluids oder einer Temperatur eines Fluids. Eine bevorzugte Temperatur eines Fluids ist eine Mischwassertemperatur. Ein bevorzugtes Überwachen der Sanitäreinrichtung beinhaltet ein kontinuierliches oder periodisches Messen mindestens einer der Messgrößen des Fluids. Ein bevorzugtes Überwachen der Sanitäreinrichtung ist eines ausgewählt aus der Gruppe bestehend aus einer Verbrauchsmessung, einer Leckageerkennung, einer Anwesenheitserkennung und einem Erstellen eines Nutzungsprofils, oder eine Kombination aus mindestens zwei davon. Eine bevorzugte Verbrauchsmessung ist eine Energieverbrauchsmessung oder eine Fluidverbrauchsmessung oder beides. Eine bevorzugte Kombination aus einem Überwachen und einem Einstellen der Sanitäreinrichtung beinhaltet ein kontinuierliches oder periodisches Messen einer Temperatur des Fluids und ein Einstellen eines Fluiddurchflusses oder einer Fluidabgabe der Sanitäreinrichtung, welche bevorzugt eine Armatur ist. Hierdurch wird vorzugweise eine Schutzfunktion, beispielsweise ein Frostschutz oder ein Verbrühschutz oder beides verwirklicht.

Bevorzugte Komponenten und Bestandteile einer erfindungsgemäßen Ausführungsform einer Kategorie der Erfindung sind auch in weiteren Ausführungsformen der anderen Kategorien der Erfindung für gleichnamige oder äquivalente Komponenten und Bestandteile bevorzugt. Ebenso sind bevorzugte Merkmale einer erfindungsgemäßen Ausführungsform einer Kategorie der Erfindung auch in weiteren Ausführungsformen der anderen Kategorien der Erfindung entsprechend bevorzugt.

### Sensor

Als Sensoren der erfindungsgemäßen Vorrichtung kommen alle dem Fachmann für den erfindungsgemäßen Zweck geeignet erscheinenden Sensoren in Betracht. Ein Sensor ist der Teil eines Messgerätes oder einer Messeinrichtung, der auf die zu messende Messgröße unmittelbar anspricht. Dieses Ansprechen auf die Messgröße wird hierin auch als Aufnehmen der Messgröße bezeichnet. Hierbei beinhaltet das Aufnehmen bevorzugt ein Ändern einer Sensorgröße durch die Einwirkung des Fluids. Im Falle des ersten Sensors ist die Sensorgröße bevorzugt die erste Kapazität. Sensoren werden auch als Aufnehmer, Messgrößenaufnehmer oder Messfühler bezeichnet. Der erste Sensor ist ein Strömungsgeschwindigkeitssensor. Somit kann der erste Sensor bevorzugt dazu verwendet werden, eine Durchflussrate des Fluids durch eine Fluidleitung zu messen. Je nach Ausführungsform der erfindungsgemäßen Vorrichtung kann der zweite Sensor beispielsweise und nicht einschränkend als ein Temperatursensor oder ein Drucksensor oder beides ausgebildet sein. Ferner kann die erfindungsgemäße Vorrichtung zusätzlich zu dem ersten Sensor und dem zweiten Sensor neben dem dritten Sensor mindestens einen oder auch eine Vielzahl weiterer Sensoren beinhalten. Hierbei ist jeder weitere Sensor dazu ausgebildet, eine weitere Messgröße aufzunehmen. Die weitere Messgröße ist jeweils bevorzugt eine weitere Messgröße des Fluids. Eine bevorzugte weitere Messgröße ist ein Gehalt eines chemischen Inhaltsstoffes des Fluids oder eines biologischen Inhaltsstoffes des Fluids oder beides. Ein bevorzugter chemischer Inhaltsstoff ist ein anorganischer Inhaltsstoff oder ein organischer Inhaltsstoff. Ein bevorzugter anorganischer Inhaltsstoff ist Kalk oder ein Metall oder beides. Ein bevorzugtes Metall ist ein Schwermetall. Hierbei ist ein Schwermetall ein Metall mit einer Dichte von mehr als 5,0 g/cm³. Beispielhafte Schwermetalle sind Blei, Cadmium, Chrom, Kobalt, Kupfer, Mangan, Molybdän, Nickel, Quecksilber, Selen, Zink, und Zinn. Ein bevorzugter biologischer Inhaltsstoff ist ein Bakterium oder ein Pilz oder beides. Bevorzugte Bakterien sind ausgewählt aus der Gruppe bestehend aus Legionellen, Salmonellen, Campylobacter, Streptokokken, und Escherichia coli, oder eine Kombination aus mindestens zwei davon.

### Temperatursensor

Als Temperatursensor kommen alle dem Fachmann bekannten und für den erfindungsgemäßen Einsatz geeignet erscheinenden Temperatursensoren in Betracht. Bevorzugt ist ein Widerstandstemperaturfühler als Temperatursensor. Ein Widerstandstemperaturfühler, der auf einer Änderung eines elektrischen Widerstands unter Temperatureinfluss basiert. Ein bevorzugter Widerstandstemperaturfühler beinhaltet einen Platin-Messwiderstand. Bevorzugte Widerstandstemperaturfühler mit Platin-Messwiderstand sind Pt100-Sensoren, Pt500-Sensoren, Pt1000-Sensoren und Kombinationen aus den vorgenannten. Platin-Messwiderstände werden nach ihrem Material und ihrem Nennwiderstand bei einer Temperatur von 0 °C bezeichnet. So weisen ein Pt100-Messwiderstand einen Nennwiderstand von 100 Ω, ein Pt500-Messwiderstand einen Nennwiderstand von 500 Ω, und ein Pt1000-Messwiderstand einen Nennwiderstand von 1 kΩ auf. Hierbei sind in einigen Ausführungsformen Messwiderstände mit Nennwert bis 10 kΩ denkbar. Ein weiterer bevorzugter Temperatursensor ist als Komponente eines integrierten Schaltkreises ausgebildet. Ein solcher Temperatursensor ist besonders im Zusammenhang mit der Ausführungsform 6 der Vorrichtung bevorzugt. Ein bevorzugter Temperatursensor ist ein bevorzugt integrierter Halbleiter-Temperatursensor oder ein Transistor oder beides. Ein bevorzugter Transistor ist als Diode geschaltet.

### Drucksensor

Als Drucksensor kommen alle dem Fachmann bekannten und für den erfindungsgemäßen Einsatz geeignet erscheinenden Drucksensoren in Betracht. Bevorzugte Drucksensoren sind kapazitive Drucksensoren, piezoresistive Drucksensoren, piezoelektrisch Drucksensoren, Drucksensoren mit Hallelement, und induktive Drucksensoren, sowie Kombinationen aus den vorgenannten. In den Fällen, dass der zweite Sensor oder der dritte Sensor ein Drucksensor ist, ist dieser vorzugsweise ein kapazitiver Drucksensor, wobei die erste flächenförmige Elektrode und die dritte flächenförmige Elektrode ein unter einem Druck und in Abhängigkeit des Drucks des Fluids veränderliche Kapazität des kapazitiven Drucksensors bilden.

### flächenförmige Elektroden

Als flächenförmige Elektrode kommen alle dem Fachmann für den erfindungsgemäßen Einsatz geeignet erscheinenden Elektroden in Betracht. Eine flächenförmige Elektrode weist vorzugsweise eine Dicke auf, die um einen Faktor von mindestens 10, bevorzugt mindestens 50, bevorzugter mindestens 100, geringer ist als jeweils ihre Breite und ihre Länge. Vorzugweise ist mindestens eine der flächenförmigen Elektroden, bevorzugt alle, als Folie, Film oder Beschichtung ausgebildet. Die flächenförmige Elektrode beinhaltet jeweils bevorzugt ein Metall oder Kohlenstoff, vorzugsweise in Form von Graphit, oder beides. Ein bevorzugtes Metall ist Aluminium.

### Substrat

Als Substrat kommt jedes dem Fachmann für den erfindungsgemäßen Zweck geeignet erscheinende Trägermaterial in Betracht. Vorzugsweise verleiht das Substrat der ersten Elektrodenanordnung eine Steifigkeit derart, dass die erste flächenförmige Elektrode unter der Einwirkung des Fluids formstabil bleibt, sich insbesondere möglichst nicht verformt. Hierzu kann das Substrat als Formkörper, beispielsweise aus Kunststoff, Messing oder Edelstahl, ausgebildet sein. In einigen Ausführungsformen, beispielsweise in der Ausführungsform 6 der erfindungsgemäßen Vorrichtung, kann das Substrat zusätzlich oder alternativ als Träger einer Leiterplatte ausgebildet sein. In den Ausführungsformen 7 und 8 ist das Substrat vorzugweise als Abstandshalter zwischen der ersten flächenförmigen Elektrode und der dritten flächenförmigen Elektrode ausgebildet. Eine Leiterplatte ist ein Träger für elektronische Bauteile. Sie dient der mechanischen Befestigung und elektrischen Verbindung. Hierzu besteht die Leiterplatte vorzugweise aus elektrisch isolierendem Material mit daran haftenden, leitenden Verbindungen (Leiterbahnen). Als isolierendes Material ist faserverstärkter Kunststoff üblich. Die Leiterbahnen werden zumeist aus einer dünnen Schicht Kupfer, üblich sind 35 µm, geätzt. Die Bauelemente werden beispielsweise auf Lötflächen (Pads) oder in Lötaugen gelötet. So werden sie an diesen Stellen gleichzeitig mechanisch gehalten und elektrisch verbunden. Größere Komponenten können auch mit Klebstoff oder Verschraubungen auf der Leiterplatte befestigt werden.

### Messeinrichtung

Eine Messeinrichtung ist in den "Grundlagen der Messtechnik" in DIN 1319 als "Gesamtheit aller Messgeräte und zusätzlicher Einrichtungen zur Erzielung eines Messergebnisses" definiert. Demnach beinhaltet eine Messeinrichtung mindestens ein Messgerät. Ein Messgerät ist ein Gerät, das zur Messung einer Messgröße vorgesehen ist. Neben einem Sensor weist das Messgerät üblicherweise eine Signalverarbeitungseinrichtung zum Auswerten eines durch den Sensor aufgenommenen Messsignals auf. Ferner kann das Messgerät eine Anzeige zur Ausgabe eines Messergebnisses aufweisen. Die Messeinrichtung kann ferner ein oder mehrere Hilfsgeräte aufweisen. Ein Hilfsgerät in einer Messeinrichtung dient nicht unmittelbar zur Aufnahme, Umformung oder Ausgabe eines Messsignals. Als Messgröße kommt jede quantitativ bestimmbare Größe in Betracht. Bei der Messgröße kann es sich beispielsweise um eine physikalische, chemische oder biologische Größe handeln.

### Signalverarbeitungseinrichtung

Als Signalverarbeitungseinrichtung kommt jede Einrichtung zum Verarbeiten eines Messsignals in Betracht, die dem Fachmann für einen erfindungsgemäßen Einsatz geeignet erscheint. Die Signalverarbeitungseinrichtung ist vorzugsweise dazu angeordnet und ausgebildet, eine oben beschriebene Sensorgröße eines der Sensoren, vorzugsweise des ersten Sensors oder des zweiten Sensors, zu einer Messgröße, vorzugsweise der ersten Messgröße oder der zweiten Messgröße zu verarbeiten. Eine bevorzugte Signalverarbeitungseinrichtung beinhaltet eine Datenverarbeitungseinrichtung. Als Datenverarbeitungseinrichtung der erfindungsgemäßen Vorrichtung kommt jede Datenverarbeitungseinrichtung, welche dem Fachmann für den erfindungsgemäßen Gebrauch geeignet erscheint in Betracht. Eine bevorzugte Datenverarbeitungseinrichtung ist eine elektronische Datenverarbeitungseinrichtung. Eine bevorzugte elektronische Datenverarbeitungseinrichtung ist ein Computer. Der Computer beinhaltet einen Prozessor, vorzugsweise eine CPU (Central Processing Unit). Ein bevorzugter Computer ist ein Mikrocontroller. Bevorzugt beinhaltet die Datenverarbeitungseinrichtung ferner einen Datenspeicher. Ein bevorzugter Datenspeicher ist ein Arbeitsspeicher oder ein Hauptspeicher oder beides.

### Sanitäreinrichtung

Als Sanitäreinrichtung kommt jede sanitäre Einrichtung, die dem Fachmann im Zusammenhang mit der Erfindung geeignet erscheint in Betracht. Eine bevorzugte Sanitäreinrichtung ist eines ausgewählt aus der Gruppe bestehend aus einer Armatur, einer Toilette, einer Dusche, einer Badewanne, einer Kochstelle, einem Trinkwasserspender, und einem Bidet, oder eine Kombination aus mindestens zwei davon, wobei eine Armatur besonders bevorzugt ist. Eine bevorzugte Armatur ist eine elektronische Armatur. Die elektronische Armatur beinhaltet vorzugsweise eine Elektronik, welche dazu angeordnet und ausgebildet ist, einen Fluiddurchfluss oder eine Fluidabgabe oder beides der Armatur zu regeln. Hierzu beinhaltet die Elektronik vorzugsweise eine Steuereinheit, welche dazu angeordnet und ausgebildet ist, ein Ventil anzusteuern.

### Armatur

Hierin ist eine bevorzugte Armatur eine Zuflussarmatur. Eine bevorzugte sanitäre Zuflussarmatur wird auch als Wasserhahn bezeichnet. Eine weitere bevorzugte Zuflussarmatur ist eine Mischbatterie. Eine bevorzugte Mischbatterie ist ein Einhebelmischer. Besonders bevorzugt ist die Zuflussarmatur berührungslos bedienbar. Hierfür ist die Zuflussarmatur bevorzugt als elektronische Armatur ausgebildet. Eine bevorzugt elektronische Zuflussarmatur weist ein Ventil, eine Regeleinheit und eine Steuereinheit auf, wobei die Steuereinheit signalübertragend mit der Regeleinheit verbunden ist. Ferner ist die Regeleinheit vorzugsweise zum Regeln des Ventils angeordnet und ausgebildet. Hierfür beinhaltet die Regeleinheit vorzugsweise einen Elektromagneten oder einen Elektromotor oder beides. Die Steuereinheit ist vorzugsweise zu einem Ansteuern der Regeleinheit angeordnet und ausgebildet. Ein bevorzugter Elektromotor ist ein Linearmotor oder ein Rotationsmotor. Eine weitere bevorzugte elektronische Armatur weist bevorzugt zusätzlich einen Sensor auf, der signalübertragend mit der Steuereinheit verbunden ist.

### Kondensator

Der erste Kondensator oder der zweite Kondensator oder beide sind vorzugsweise Plattenkondensatoren oder Folienkondensatoren oder beides.

### Fluid

Ein Fluid ist ein fließfähiges Medium. Bevorzugte fließfähige Medien sind Gase und Flüssigkeiten. Eine bevorzugte Flüssigkeit ist Wasser, vorzugsweise Trinkwasser oder Brauchwasser. Ein ganz besonders bevorzugtes Fluid ist Wasser.

Die Erfindung wird im Folgenden durch Beispiele und Zeichnungen genauer dargestellt, wobei die Beispiele und Zeichnungen keine Einschränkung der Erfindung bedeuten. Die Zeichnungen sind, sofern nicht anders angegeben, nicht maßstabsgetreu.

Es zeigen:
- Figur 1: eine schematische Darstellung einer erfindungsgemäßen Vorrichtung im Querschnitt;
- Figur 2: eine schematische Darstellung einer weiteren erfindungsgemäßen Vorrichtung im Querschnitt;
- Figur 3: eine schematische Darstellung einer weiteren erfindungsgemäßen Vorrichtung im Querschnitt;
- Figur 4: eine schematische Darstellung einer weiteren erfindungsgemäßen Vorrichtung im Querschnitt;
- Figur 5: eine schematische Darstellung einer weiteren erfindungsgemäßen Vorrichtung im Querschnitt; und
- Figur 6: eine schematische Darstellung einer erfindungsgemäßen Sanitäreinrichtung mit einer erfindungsgemäßen Messeinrichtung im Querschnitt.

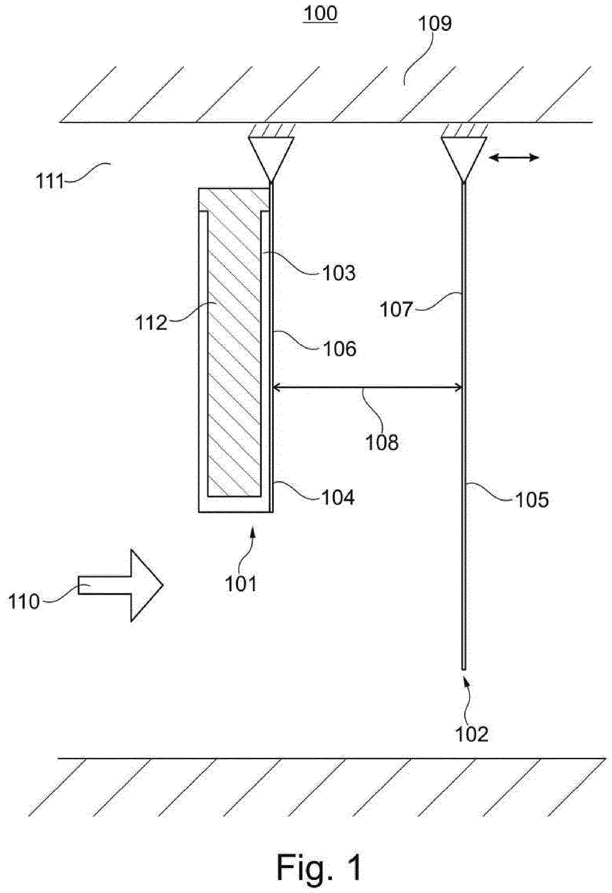

Figur 1 zeigt eine schematische Darstellung einer erfindungsgemäßen Vorrichtung 100 im Querschnitt. Die Vorrichtung 100 ist in einer Fluidleitung 109, welche ein Fluid 111 beinhaltet, angeordnet. Das Fluid 111 ist hier Wasser und die Fluidleitung 109 ist ein Wasserrohr. Eine Fluidströmung 110 ist in der Figur durch einen Pfeil dargestellt. Die Vorrichtung 100 beinhaltet einen ersten Sensor, ausgebildet und angeordnet zum Aufnehmen einer ersten Messgröße des Fluids 111, und einen zweiten Sensor, ausgebildet und angeordnet zum Aufnehmen einer zweiten Messgröße des Fluids 111. Hierbei ist die erste Messgröße eine Durchflussrate des Fluids 111 durch die Fluidleitung 109. Die zweite Messgröße ist eine Temperatur des Fluids 111. Demnach ist der zweite Sensor ein Temperatursensor 112. Die Vorrichtung 100 beinhaltet eine erste Elektrodenanordnung 101 mit einem Substrat 103 und einer das Substrat 103 überlagernden ersten flächenförmigen Elektrode 104. Ferner beinhaltet die Vorrichtung eine zweite Elektrodenanordnung 102, beinhaltend eine zweite flächenförmige Elektrode 105. Die erste flächenförmige Elektrode 104 beinhaltet eine der zweiten flächenförmigen Elektrode 105 zugewandte erste Elektrodenfläche 106 und die zweite flächenförmige Elektrode 105 beinhaltet eine der ersten flächenförmigen Elektrode 104 zugewandte zweite Elektrodenfläche 107. Hierbei ist die zweite Elektrodenfläche 107 größer als die erste Elektrodenfläche 106, so dass das Fluid 111 einen überstehenden Bereich der zweiten Elektrodenfläche 107 anströmen kann. Einander überdeckende Bereiche der ersten Elektrodenfläche 106 und der zweiten Elektrodenfläche 107 bestimmen eine erste Kapazität eines ersten Kondensators. Die erste flächenförmige Elektrode 104 ist hier als eine Metallfolie ausgebildet. Das Substrat 103 ist ein Formkörper aus Kunststoff, in dem der Temperatursensor 112, welcher ein Pt100-Widerstandstemperaturfühler ist, teilweise eingegossen ist. Die erste flächenförmige Elektrode 104 und die zweite flächenförmige Elektrode 105 sind dielektrisch voneinander beabstandet um einen Abstand 108. Hierbei sind die erste flächenförmige Elektrode 104 und die zweite flächenförmige Elektrode 105 jeweils mit einem einhüllenden Dielektrikum (nicht dargestellt) versehen, welches die jeweilige Elektrode elektrisch von dem Fluid 111 isoliert. Die zweite flächenförmige Elektrode 104 ist als Platte ausgebildet, die so dick ist, dass die zweite flächenförmige Elektrode unter der Einwirkung der Fluidströmung 110 ihre Form beibehält. Die erste flächenförmige Elektrode 104 wird durch das Substrat 103 formstabil gehalten. Die zweite flächenförmige Elektrode 105 ist in der Figur horizontal verschiebbar gelagert, wobei die Vorrichtung 100 eine nicht dargestellte Feder als Rückstellelement beinhaltet, das dazu angeordnet und ausgebildet ist, die zweite flächenförmige Elektrode 105 in eine Gleichgewichtslage eines mittleren Abstands zu der ersten flächenförmigen Elektrode 104 zu bringen. Demnach bilden die erste Elektrodenanordnung 101 und die zweite Elektrodenanordnung 102 den ersten Kondensator als den ersten Sensor so, dass die durch die erste flächenförmige Elektrode 104 und die zweite flächenförmige Elektrode 105 gebildete erste Kapazität unter der Einwirkung des strömenden Fluids 111 und in Abhängigkeit einer Strömungsgeschwindigkeit des Fluids 111 als der ersten Messgröße veränderlich ist. Die erste Elektrodenanordnung 101 beinhaltet zudem den Temperatursensor 112 als den zweiten Sensor.

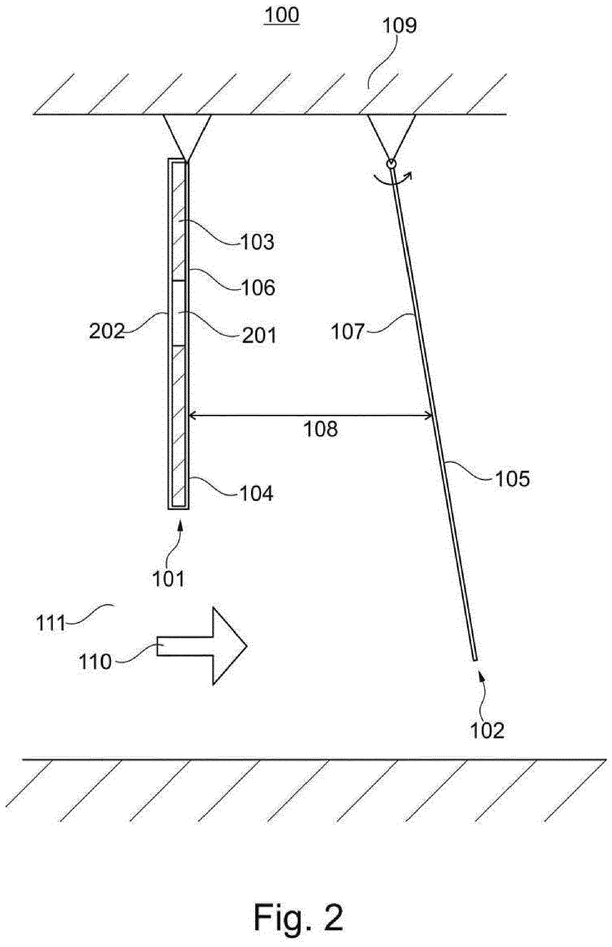

Figur 2 zeigt eine schematische Darstellung einer weiteren erfindungsgemäßen Vorrichtung 100 im Querschnitt. Die Vorrichtung 100 ist in einer Fluidleitung 109, welche ein Fluid 111 beinhaltet, angeordnet. Das Fluid 111 ist hier Wasser und die Fluidleitung 109 ist ein Wasserweg einer Sanitäreinrichtung 600. Eine Fluidströmung 110 ist in der Figur durch einen Pfeil dargestellt. Die Vorrichtung 100 beinhaltet einen ersten Sensor, ausgebildet und angeordnet zum Aufnehmen einer ersten Messgröße des Fluids 111, und einen zweiten Sensor, ausgebildet und angeordnet zum Aufnehmen einer zweiten Messgröße des Fluids 111. Hierbei ist die erste Messgröße eine Durchflussrate des Fluids 111 durch die Fluidleitung 109. Die zweite Messgröße ist ein Druck des Fluids 111. Demnach ist der zweite Sensor ein Drucksensor. Die Vorrichtung 100 beinhaltet eine erste Elektrodenanordnung 101 mit einem Substrat 103 und einer das Substrat 103 überlagernden ersten flächenförmigen Elektrode 104. Ferner beinhaltet die Vorrichtung 100 eine zweite Elektrodenanordnung 102, beinhaltend eine zweite flächenförmige Elektrode 105. Die erste flächenförmige Elektrode 104 beinhaltet eine der zweiten flächenförmigen Elektrode 105 zugewandte erste Elektrodenfläche 106 und die zweite flächenförmige Elektrode 105 beinhaltet eine der ersten flächenförmigen Elektrode 104 zugewandte zweite Elektrodenfläche 107. Hierbei ist die zweite Elektrodenfläche 107 größer als die erste Elektrodenfläche 106, so dass das Fluid 111 einen überstehenden Bereich der zweiten Elektrodenfläche 107 anströmen kann. Einander überdeckende Bereiche der ersten Elektrodenfläche 106 und der zweiten Elektrodenfläche 107 bestimmen eine erste Kapazität eines ersten Kondensators. Die erste flächenförmige Elektrode 104 und die zweite flächenförmige Elektrode 105 sind hier jeweils als eine Metallfolie ausgebildet. Die erste Elektrodenanordnung 101 beinhaltet ferner eine das Substrat 103 auf einer von der ersten flächenförmigen Elektrode 104 abgewandten Seite überlagernde dritte flächenförmige Elektrode 202. Auch diese ist als Metallfolie ausgebildet. Das Substrat 103 ist als formstabiler Abstandshalter aus Kunststoff ausgebildet, der die erste flächenförmige Elektrode 104 und die dritte flächenförmige Elektrode 202 dielektrisch voneinander beabstandet. Das Substrat 103 schließt zwischen der ersten flächenförmigen Elektrode 104 und der dritten flächenförmigen Elektrode 202 einen Hohlraum 201 teilweise ein. Hierzu weist das Substrat 103 ein Loch auf, welches mit der ersten flächenförmigen Elektrode 103 und der dritten flächenförmigen Elektrode 202 jeweils überdeckt ist. Die erste Elektrodenanordnung 101 weist zudem eine nicht dargestellte Entlüftung für den Hohlraum 201 auf. Eine solche Entlüftung kann beispielsweise als luftleitender Kanal, beispielsweise zwischen dem Substrat 103 und der dritten flächenförmigen Elektrode 202, ausgebildet sein. Die erste Elektrodenanordnung 101 bildet somit einen zweiten Kondensator als den zweiten Sensor. Die erste flächenförmige Elektrode 104 und die dritte flächenförmige Elektrode 202 bilden eine zweite Kapazität des zweiten Kondensators. Werden die erste flächenförmige Elektrode 104 und die dritte flächenförmige Elektrode 202 durch einen Druck des Fluids 111 aufeinander zu gedrückt, so dass sich der Hohlraum 201 verkleinert, so vergrößert sich die zweite Kapazität in Abhängigkeit des Drucks. Ein Einfluss der Fluidströmung 111 kann hier mittels eines mit dem ersten Sensor erhaltenen Messergebnisses herausgerechnet werden. Dies kann mittels einer Signalverarbeitungseinrichtung 601 einer die Vorrichtung 100 beinhaltenden Messeinrichtung 602 erfolgen. Somit ist die zweite Kapazität unter der Einwirkung des Fluids 111 und in Abhängigkeit des Drucks des Fluids 111 als der zweiten Messgröße veränderlich. Die erste flächenförmige Elektrode 104 und die zweite flächenförmige Elektrode 105 sind dielektrisch voneinander beabstandet um einen Abstand 108. Die zweite flächenförmige Elektrode 104 befindet sich auf einem Träger (nicht dargestellt), welcher gewährleistet, dass die zweite flächenförmige Elektrode 104 unter der Einwirkung der Fluidströmung 110 ihre Form beibehält. Die erste flächenförmige Elektrode 104 wird durch das Substrat 103 formstabil gehalten, abgesehen von dem Bereich der ersten flächenförmigen Elektrode 104, welcher das Loch in dem Substrat 103 überdeckt. Gleiches gilt für die dritte flächenförmige Elektrode 202. Die zweite flächenförmige Elektrode 105 ist wie in der Figur durch einen Pfeil angedeutet um eine Drehachse rotierbar gelagert, wobei die Vorrichtung 100 eine nicht dargestellte Drehfeder als Rückstellelement beinhaltet, das dazu angeordnet und ausgebildet ist, die zweite flächenförmige Elektrode 105 in eine Gleichgewichtslage eines mittleren Abstands zu der ersten flächenförmigen Elektrode 104 zu bringen. Demnach bilden die erste Elektrodenanordnung 101 und die zweite Elektrodenanordnung 102 den ersten Kondensator als den ersten Sensor so, dass die durch die erste flächenförmige Elektrode 104 und die zweite flächenförmige Elektrode 105 gebildete erste Kapazität unter der Einwirkung des strömenden Fluids 111 und in Abhängigkeit einer Strömungsgeschwindigkeit des Fluids 111 als der ersten Messgröße veränderlich ist. Die erste Elektrodenanordnung 101 beinhaltet zudem den Drucksensor als den zweiten Sensor. Soll die Vorrichtung 100 in einem elektrisch leitenden Fluid 111 verwendet werden, so sind die Elektroden 104, 105 selbstverständlich elektrisch gegen das Fluid 111 zu isolieren. Dies kann durch entsprechende Beschichtungen, beispielsweise aus Kunststoff, erfolgen.

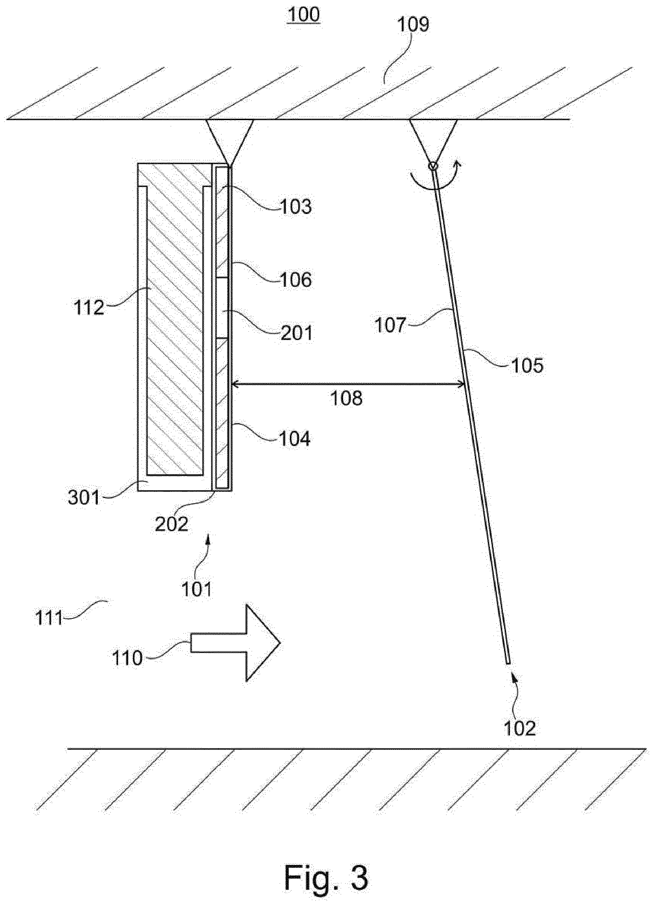

Figur 3 zeigt eine schematische Darstellung einer weiteren erfindungsgemäßen Vorrichtung 100 im Querschnitt. Die Vorrichtung 100 der Figur 3 ist wie die Vorrichtung 100 der Figur 2 ausgestaltet und angeordnet, wobei die Vorrichtung 100 der Figur 3 zusätzlich einen dritten Sensor beinhaltet, der dazu angeordnet und ausgebildet ist eine dritte Messgröße des Fluids 111 aufzunehmen. Die dritte Messgröße ist eine Temperatur des Fluids. Der dritte Sensor ist ein Pt1000-Widerstandsmessfühler als Temperatursensor 112. Der Temperatursensor 112 ist so in einen Stator 301 eingegossen, dass der Stator 301, welcher ein formstabiler Formkörper aus Kunststoff ist, den Temperatursensor 112 teilweise umgibt. Folglich beinhaltet die Vorrichtung 100 3 Sensoren, welche in einem relativ kleinen Bauraum angeordnet werden können.

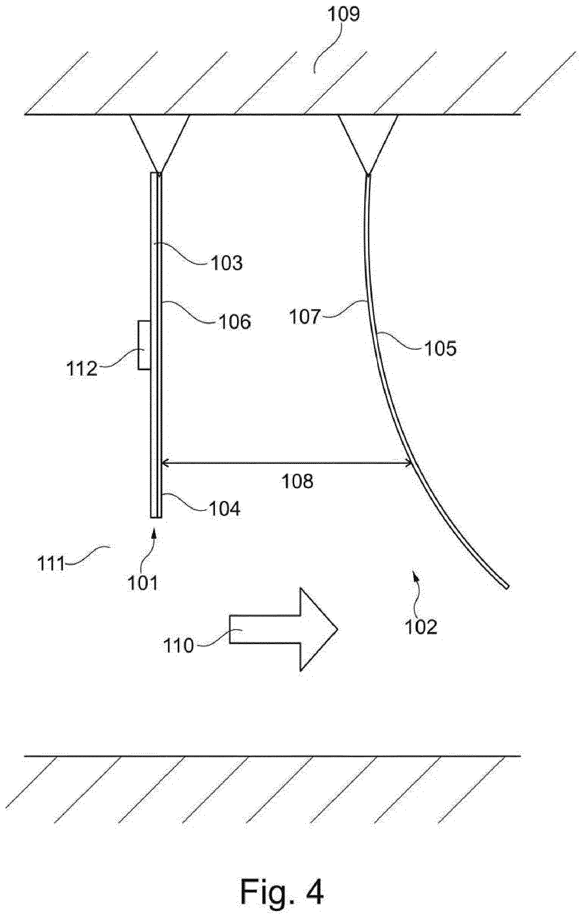

Figur 4 zeigt eine schematische Darstellung einer weiteren erfindungsgemäßen Vorrichtung 100 im Querschnitt. Die Vorrichtung 100 ist in einer Fluidleitung 109, welche ein Fluid 111 beinhaltet, angeordnet. Das Fluid 111 ist hier Wasser und die Fluidleitung 109 ist ein Wasserrohr. Eine Fluidströmung 110 ist in der Figur durch einen Pfeil dargestellt. Die Vorrichtung 100 beinhaltet einen ersten Sensor, ausgebildet und angeordnet zum Aufnehmen einer ersten Messgröße des Fluids 111, und einen zweiten Sensor, ausgebildet und angeordnet zum Aufnehmen einer zweiten Messgröße des Fluids 111. Hierbei ist die erste Messgröße eine Durchflussrate des Fluids 111 durch die Fluidleitung 109. Die zweite Messgröße ist eine Temperatur des Fluids 111. Demnach ist der zweite Sensor ein Temperatursensor 112. Dieser ist als integrierter Halbleiter-Temperatursensor ausgebildet und von einer integrierten Schaltung (nicht dargestellt) beinhaltet. Die Vorrichtung 100 beinhaltet eine erste Elektrodenanordnung 101 mit einem Substrat 103 und einer das Substrat 103 überlagernden ersten flächenförmigen Elektrode 104. Das Substrat 103 ist hier als formstabiler Träger aus Kunststoff einer Leiterplatte ausgebildet. Die Leiterplatte beinhaltet eine Vielzahl von Leiterbahnen (nicht dargestellt) als Bestandteil der integrierten Schaltung. Die Leiterbahnen überlagern das Substrat 103 auf einer von der ersten flächenförmigen Elektrode 104 abgewandten Seite. Der Temperatursensor 112 überlagert das Substrat 103 ebenfalls auf der von der ersten flächenförmigen Elektrode 104 abgewandten Seite. Ferner ist der Temperatursensor 112 elektrisch leitend mit zumindest einem Teil der Leiterbahnen verbunden. Ferner beinhaltet die Vorrichtung eine zweite Elektrodenanordnung 102, beinhaltend eine zweite flächenförmige Elektrode 105. Die erste flächenförmige Elektrode 104 beinhaltet eine der zweiten flächenförmigen Elektrode 105 zugewandte erste Elektrodenfläche 106 und die zweite flächenförmige Elektrode 105 beinhaltet eine der ersten flächenförmigen Elektrode 104 zugewandte zweite Elektrodenfläche 107. Hierbei ist die zweite Elektrodenfläche 107 größer als die erste Elektrodenfläche 106, so dass das Fluid 111 einen überstehenden Bereich der zweiten Elektrodenfläche 107 anströmen kann. Einander überdeckende Bereiche der ersten Elektrodenfläche 106 und der zweiten Elektrodenfläche 107 bestimmen eine erste Kapazität eines ersten Kondensators. Die erste flächenförmige Elektrode 104 und die zweite flächenförmige Elektrode 105 sind dielektrisch voneinander beabstandet um einen Abstand 108. Hierbei sind die erste flächenförmige Elektrode 104 und die zweite flächenförmige Elektrode 105 jeweils mit einem einhüllenden Dielektrikum (nicht dargestellt) versehen, welches die jeweilige Elektrode elektrisch von dem Fluid 111 isoliert. Die erste flächenförmige Elektrode 104 und die zweite flächenförmige Elektrode 105 sind hier jeweils als eine Metallfolie ausgebildet. Die erste flächenförmige Elektrode 014 wird gegen die Einwirkung des Fluids 111 durch das Substrat 103 formstabil gehalten. Die zweite flächenförmige Elektrode 105 befindet sich auf einem nicht dargestellten Kunststoffträger, welcher so flexibel ausgestaltet ist, dass sich der Träger mit der zweiten flächenförmigen Elektrode 105 wie in der Figur dargestellt unter der Einwirkung des Fluids 111 elastisch verformen kann, um einen mittleren Abstand zwischen den beiden Elektroden 104 und 105 in Abhängigkeit einer Strömungsgeschwindigkeit des Fluids 111 zu vergrößern. Demnach bilden die erste Elektrodenanordnung 101 und die zweite Elektrodenanordnung 102 den ersten Kondensator als den ersten Sensor so, dass die durch die erste flächenförmige Elektrode 104 und die zweite flächenförmige Elektrode 105 gebildete erste Kapazität unter der Einwirkung des strömenden Fluids 111 und in Abhängigkeit einer Strömungsgeschwindigkeit des Fluids 111 als der ersten Messgröße veränderlich ist. Die erste Elektrodenanordnung 101 beinhaltet zudem den Temperatursensor 112 als den zweiten Sensor.

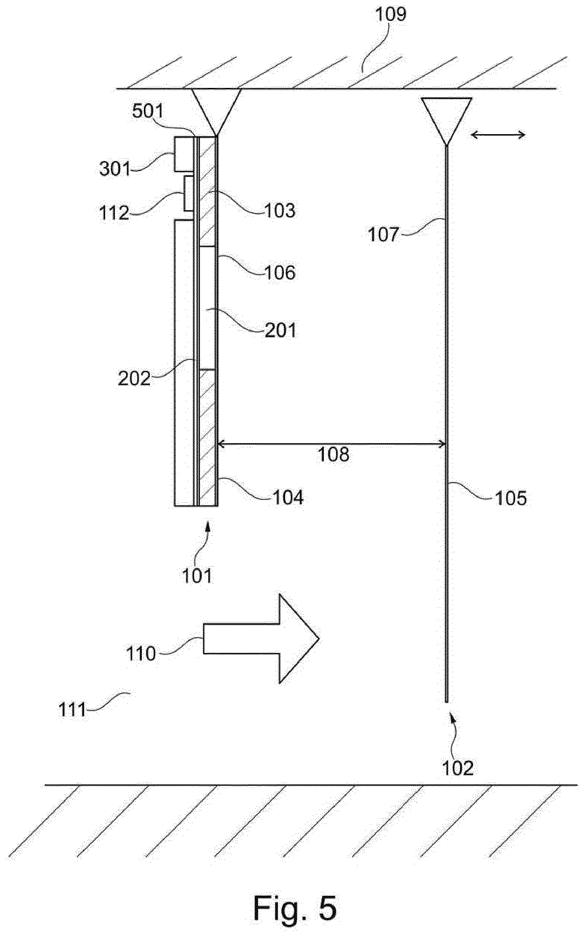

Figur 5 zeigt eine schematische Darstellung einer weiteren erfindungsgemäßen Vorrichtung 100 im Querschnitt. Die Vorrichtung 100 ist in einer Fluidleitung 109, welche ein Fluid 111 beinhaltet, unmittelbar vor einer Sanitäreinrichtung 600 angeordnet. Das Fluid 111 ist hier Wasser und die Fluidleitung 109 ist ein Wasserrohr. Eine Fluidströmung 110 ist in der Figur durch einen Pfeil dargestellt. Die Vorrichtung 100 beinhaltet einen ersten Sensor, ausgebildet und angeordnet zum Aufnehmen einer ersten Messgröße des Fluids 111; einen zweiten Sensor, ausgebildet und angeordnet zum Aufnehmen einer zweiten Messgröße des Fluids 111; und einen dritten Sensor, ausgebildet und angeordnet zum Aufnehmen einer dritten Messgröße des Fluids 111. Hierbei ist die erste Messgröße eine Durchflussrate des Fluids 111 durch die Fluidleitung 109. Die zweite Messgröße ist eine Temperatur des Fluids 111. Demnach ist der zweite Sensor ein Temperatursensor 112. Dieser ist als integrierter Halbleiter-Temperatursensor ausgebildet und von einer integrierten Schaltung (nicht dargestellt) beinhaltet. Die dritte Messgröße ist ein Druck des Fluids 111. Somit ist der dritte Sensor als Drucksensor ausgebildet. Die Vorrichtung 100 beinhaltet eine erste Elektrodenanordnung 101 mit einem Substrat 103 und einer das Substrat 103 überlagernden ersten flächenförmigen Elektrode 104. Ferner beinhaltet die Vorrichtung 100 eine zweite Elektrodenanordnung 102, beinhaltend eine zweite flächenförmige Elektrode 105. Die erste flächenförmige Elektrode 104 beinhaltet eine der zweiten flächenförmigen Elektrode 105 zugewandte erste Elektrodenfläche 106 und die zweite flächenförmige Elektrode 105 beinhaltet eine der ersten flächenförmigen Elektrode 104 zugewandte zweite Elektrodenfläche 107. Hierbei ist die zweite Elektrodenfläche 107 größer als die erste Elektrodenfläche 106, so dass das Fluid 111 einen überstehenden Bereich der zweiten Elektrodenfläche 107 anströmen kann. Die zweite flächenförmige Elektrode 105 ist in der Figur horizontal verschiebbar gelagert, wobei die Vorrichtung 100 eine nicht dargestellte Feder als Rückstellelement beinhaltet, das dazu angeordnet und ausgebildet ist, die zweite flächenförmige Elektrode 105 in eine Gleichgewichtslage eines mittleren Abstands zu der ersten flächenförmigen Elektrode 104 zu bringen. Einander überdeckende Bereiche der ersten Elektrodenfläche 106 und der zweiten Elektrodenfläche 107 bestimmen eine erste Kapazität eines ersten Kondensators. Die erste flächenförmige Elektrode 104 und die zweite flächenförmige Elektrode 105 sind hier jeweils als eine Metallfolie ausgebildet. Die erste Elektrodenanordnung 101 beinhaltet ferner eine das Substrat 103 auf einer von der ersten flächenförmigen Elektrode 104 abgewandten Seite überlagernde dritte flächenförmige Elektrode 202. Auch diese ist als Metallfolie ausgebildet. Das Substrat 103 ist als formstabiler Abstandshalter aus Kunststoff ausgebildet, der die erste flächenförmige Elektrode 104 und die dritte flächenförmige Elektrode 202 dielektrisch voneinander beabstandet. Das Substrat 103 schließt zwischen der ersten flächenförmigen Elektrode 104 und der dritten flächenförmigen Elektrode 202 einen Hohlraum 201 teilweise ein. Hierzu weist das Substrat 103 ein Loch auf, welches mit der ersten flächenförmigen Elektrode 103 und der dritten flächenförmigen Elektrode 202 jeweils überdeckt ist. Die erste Elektrodenanordnung 101 weist zudem eine nicht dargestellte Entlüftung für den Hohlraum 201 auf. Eine solche Entlüftung kann beispielsweise als luftleitender Kanal, beispielsweise zwischen dem Substrat 103 und der dritten flächenförmigen Elektrode 202, ausgebildet sein. Die erste Elektrodenanordnung 101 bildet somit einen zweiten Kondensator als den dritten Sensor. Die erste flächenförmige Elektrode 104 und die dritte flächenförmige Elektrode 202 bilden eine zweite Kapazität des zweiten Kondensators. Werden die erste flächenförmige Elektrode 104 und die dritte flächenförmige Elektrode 202 durch einen Druck des Fluids 111 aufeinander zu gedrückt, so dass sich der Hohlraum 201 verkleinert, so vergrößert sich die zweite Kapazität in Abhängigkeit des Drucks. Die dritte flächenförmige Elektrode 202 ist ferner auf einer von dem Substrat 103 abgewandten Seite von einer Leiterplatte überlagert. Hierbei bildet eine elektrisch isolierende Schicht 501 aus einem Kunststoff einen Träger der Leiterplatte. Die Leiterplatte beinhaltet ferner eine Vielzahl von Leiterbahnen (nicht dargestellt) als Bestandteil der integrierten Schaltung. Der Temperatursensor 112 ist fest mit der Leiterplatte und elektrisch leitend mit zumindest einem Teil der Leiterbahnen verbunden. Ein Stator 301, also ein formstabiler Formkörper, umschließt den Temperatursensor 112 teilweise, so dass dieser vor mechanischen Einflüssen geschützt ist, jedoch das Fluid 111 zum Aufnehmen der Temperatur an den Temperatursensor 112 gelangen kann. Demnach bilden die erste Elektrodenanordnung 101 und die zweite Elektrodenanordnung 102 den ersten Kondensator als den ersten Sensor so, dass die durch die erste flächenförmige Elektrode 104 und die zweite flächenförmige Elektrode 105 gebildete erste Kapazität unter der Einwirkung des strömenden Fluids 111 und in Abhängigkeit einer Strömungsgeschwindigkeit des Fluids 111 als der ersten Messgröße veränderlich ist. Die erste Elektrodenanordnung 101 beinhaltet zudem den Temperatursensor 112 als den zweiten Sensor. Folglich beinhaltet die Vorrichtung 100 3 Sensoren, welche in einem relativ kleinen Bauraum angeordnet werden können.

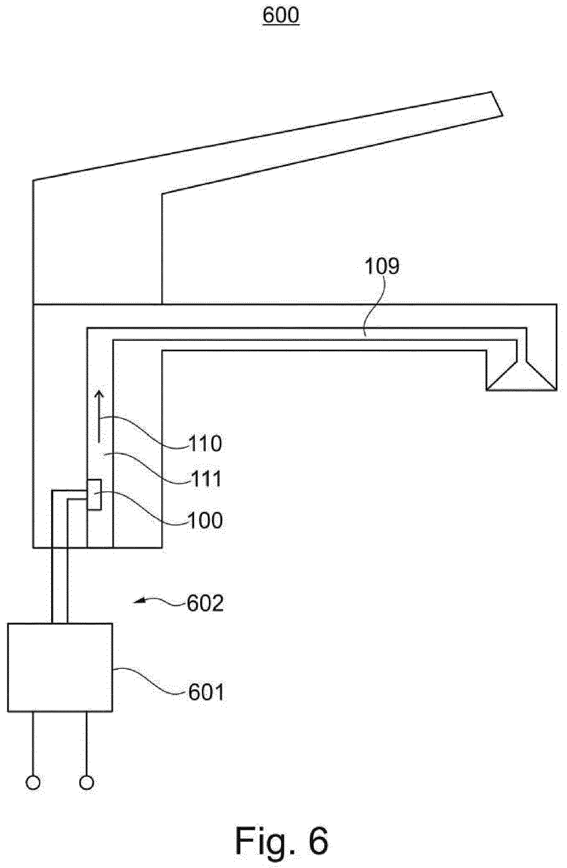

Figur 6 zeigt eine schematische Darstellung einer erfindungsgemäßen Sanitäreinrichtung 600 mit einer erfindungsgemäßen Messeinrichtung 602 im Querschnitt. Die Sanitäreinrichtung 600 ist eine Armatur, genauer ein Einhebelmischer. Die Armatur weist eine Fluidleitung 109, beinhaltend Wasser als Fluid 111 auf. Das Wasser strömt in der Fluidleitung 111 (Fluidströmung 110) zu einem Wasserauslass der Armatur. In der Fluidleitung 109 ist eine erfindungsgemäße Vorrichtung 100 angeordnet, welche von der Messeinrichtung 602 beinhaltet ist. Die Messeinrichtung 602 umfasst ferner eine Signalverarbeitungseinrichtung 601, welche signalübertragend mit einem ersten Sensor und einem zweiten Sensor der Vorrichtung 100 verbunden ist. Ferner weist die Messeinrichtung 602 ein Netzteil als Spannungsquelle auf. Die Signalverarbeitungseinrichtung 601 ist dazu angeordnet und ausgebildet ist ein Messsignal einer ersten Messgröße und einer zweiten Messgröße zu verarbeiten. Hierbei ist der erste Sensor dazu angeordnet und ausgebildet, die erste Messgröße des Fluids 111 aufzunehmen und der zweite Sensor dazu, die zweite Messgröße des Fluids 111 aufzunehmen.

### Bezugszeichenliste

- **100**: erfindungsgemäße Vorrichtung
- **101**: erste Elektrodenanordnung
- **102**: zweite Elektrodenanordnung
- **103**: Substrat
- **104**: erste flächenförmige Elektrode
- **105**: zweite flächenförmige Elektrode
- **106**: erste Elektrodenfläche
- **107**: zweite Elektrodenfläche
- **108**: Abstand zwischen der ersten flächenförmigen Elektrode und der zweiten flächenförmigen Elektrode
- **109**: Fluidleitung
- **110**: Fluidströmung
- **111**: Fluid
- **112**: Temperatursensor
- **201**: Hohlraum
- **202**: dritte flächenförmige Elektrode
- **301**: Stator
- **501**: elektrisch isolierende Schicht
- **600**: Sanitäreinrichtung
- **601**: Signalverarbeitungseinrichtung
- **602**: Messeinrichtung

## Patentansprüche

1. Eine Vorrichtung (100), beinhaltend
a) einen ersten Sensor, ausgebildet und angeordnet zum Aufnehmen einer ersten Messgröße eines Fluids (111), und
b) einen zweiten Sensor, ausgebildet und angeordnet zum Aufnehmen einer zweiten Messgröße des Fluids (111);
wobei die Vorrichtung
a. eine erste Elektrodenanordnung (101), beinhaltend
i) ein Substrat (103), und
ii) eine das Substrat (103) überlagernde erste flächenförmige Elektrode (106), und
b. eine zweite Elektrodenanordnung (102), beinhaltend eine zweite flächenförmige Elektrode (105),
beinhaltet;
wobei die erste flächenförmige Elektrode (104) und die zweite flächenförmige Elektrode (105) dielektrisch voneinander beabstandet sind;
wobei die erste Elektrodenanordnung (101) und die zweite Elektrodenanordnung (102) einen ersten Kondensator als den ersten Sensor derart bilden, dass eine durch die erste flächenförmige Elektrode (104) und die zweite flächenförmige Elektrode (105) gebildete erste Kapazität unter einer Einwirkung eines Fluids (111) und in Abhängigkeit einer Strömungsgeschwindigkeit des Fluids (111) als der ersten Messgröße veränderlich ist; **dadurch gekennzeichnet, dass** die erste Elektrodenanordnung (101) den zweiten Sensor beinhaltet.

2. Die Vorrichtung (100) nach Anspruch 1, wobei die Vorrichtung (100) dazu ausgebildet ist, in einer zu einem Leiten des Fluids (111) ausgebildeten Fluidleitung (109) angeordnet zu werden.

3. Die Vorrichtung (100) nach Anspruch 2, wobei die Fluidleitung (109) von einer Sanitäreinrichtung (600) beinhaltet ist.

4. Die Vorrichtung (100) nach einem der vorhergehenden Ansprüche, wobei die zweite Messgröße eine Temperatur des Fluids (111) oder ein Druck des Fluids (111) oder beides ist.

5. Die Vorrichtung (100) nach einem der vorhergehenden Ansprüche, wobei das Substrat (103) den zweiten Sensor mindestens teilweise umschließt.

6. Die Vorrichtung (100) nach einem der Ansprüche 1 bis 4, wobei das Substrat (103) auf einer von der ersten flächenförmigen Elektrode (104) abgewandten Seite mit mindestens einer elektrischen Leiterbahn überlagert ist;
wobei der zweite Sensor
A. das Substrat (103) auf der von der ersten flächenförmigen Elektrode (104) abgewandten Seite überlagert, und
B. elektrisch leitend mit der mindestens einen elektrischen Leiterbahn verbunden ist.

7. Die Vorrichtung (100) nach Anspruch 5 oder 6, wobei die Vorrichtung (100) einen dritten Sensor, ausgebildet und angeordnet zum Aufnehmen einer dritten Messgröße des Fluids (111), beinhaltet;
wobei die erste Elektrodenanordnung (101) eine das Substrat (103) auf einer von der ersten flächenförmigen Elektrode (104) abgewandten Seite überlagernde dritte flächenförmige Elektrode (202) beinhaltet;
wobei das Substrat (103) die erste flächenförmige Elektrode (104) und die dritte flächenförmige Elektrode (202) dielektrisch voneinander beabstandet;
wobei die erste Elektrodenanordnung (101) einen zweiten Kondensator als den dritten Sensor bildet;
wobei die erste flächenförmige Elektrode (104) und die dritte flächenförmige Elektrode (202) eine zweite Kapazität des zweiten Kondensators bilden;
wobei das Substrat (103) so angeordnet und ausgebildet ist, dass die zweite Kapazität unter der Einwirkung des Fluids (111) und in Abhängigkeit eines Drucks des Fluids (111) als der dritten Messgröße veränderlich ist.

8. Die Vorrichtung (100) nach einem der Ansprüche 1 bis 4, wobei die erste Elektrodenanordnung (101) eine das Substrat (103) auf einer von der ersten flächenförmigen Elektrode (104) abgewandten Seite überlagernde dritte flächenförmige Elektrode (202) beinhaltet; wobei das Substrat (103) die erste flächenförmige Elektrode (104) und die dritte flächenförmige Elektrode (202) dielektrisch voneinander beabstandet;
wobei die erste Elektrodenanordnung (101) einen zweiten Kondensator als den zweiten Sensor bildet;
wobei die erste flächenförmige Elektrode (104) und die dritte flächenförmige Elektrode (202) eine zweite Kapazität des zweiten Kondensators bilden;
wobei das Substrat (103) so angeordnet und ausgebildet ist, dass die zweite Kapazität unter der Einwirkung des Fluids (111) und in Abhängigkeit eines Drucks des Fluids (111) als der zweiten Messgröße veränderlich ist.

9. Die Vorrichtung (100) nach Anspruch 7 oder 8, wobei das Substrat (103) zwischen der ersten flächenförmigen Elektrode (104) und der dritten flächenförmigen Elektrode (202) einen Hohlraum (201) mindestens teilweise einschließt.

10. Eine Messeinrichtung (602), beinhaltend die Vorrichtung (100) nach einem der vorhergehenden Ansprüche und eine Signalverarbeitungseinrichtung (601),
wobei die Signalverarbeitungseinrichtung (601)
A) dazu angeordnet und ausgebildet ist ein Messsignal der ersten Messgröße oder der zweiten Messgröße oder beider zu verarbeiten, und
B) signalübertragend mit dem ersten Sensor oder dem zweiten Sensor oder beiden verbunden ist.

11. Eine Sanitäreinrichtung (600), beinhaltend die Vorrichtung (100) nach einem der Ansprüche 1 bis 9, oder die Messeinrichtung (602) nach Anspruch 10.

12. Eine Verwendung der Vorrichtung (100) nach einem der Ansprüche 1 bis 9 in einer Fluidleitung (109).

## Claims

1. A device (100) comprising
a) a first sensor designed and arranged for sensing a first measurement variable of a fluid (111), and
b) a second sensor designed and arranged for sensing a second measurement variable of the fluid (111),
wherein the device comprises
a. a first electrode arrangement (101) comprising
i) a substrate (103) and
ii) a first sheet electrode (106) overlaying the substrate (103) and
b. a second electrode arrangement (102) comprising a second sheet electrode (105),
wherein the first sheet electrode (104) and the second sheet electrode (105) are dielectrically separated from each other;
wherein the first electrode arrangement (101) and the second electrode arrangement (102) form a first capacitor as the first sensor in such a way that a first capacitance formed by the first sheet electrode (104) and the second sheet electrode (105) is variable under the effect of a fluid (111) and in function of a flow rate of the fluid (111) as the first measurement variable;
**characterized in that**
the first electrode arrangement (101) comprises the second sensor.

2. The device (100) according to Claim 1, wherein the device (100) is designed to be arranged in a fluid line (109) designed to conduct the fluid (111).

3. The device (100) according to Claim 2, wherein the fluid line (109) is part of a sanitary facility (600).

4. The device (100) according to any one of the preceding claims, wherein the second measurement variable is a temperature of the fluid (111) or a pressure of the fluid (111) or both.

5. The device (100) according to any one of the preceding claims, wherein the substrate (103) at least partially encloses the second sensor.

6. The device (100) according to any one of Claims 1 to 4, wherein the substrate (103) is overlaid with at least one electrical conductor path on a side facing away from the first sheet electrode (104);
wherein the second sensor
A. overlays the substrate (103) on the side facing away from the first sheet electrode (104), and
B. is connected in an electrically conductive manner to the at least one electrical conductor path.

7. The device (100) according to Claim 5 or 6, wherein the device (100) comprises a third sensor designed and arranged for sensing a third measurement variable of the fluid (111);
wherein the first electrode arrangement (101) comprises a third sheet electrode (202) overlaying the substrate (103) on a side facing away from the first sheet electrode (104);
wherein the substrate (103) dielectrically separates the first sheet electrode (104) and the third sheet electrode (202) from each other;
wherein the first electrode arrangement (101) forms a second capacitor as the third sensor;
wherein the first sheet electrode (104) and the third sheet electrode (202) form a second capacitance of the second capacitor;
wherein the substrate (103) is arranged and designed such that the second capacitance is variable under the action of the fluid (111) and in function of a pressure of the fluid (111) as the third measurement variable.

8. The device (100) according to any one of Claims 1 to 4, wherein the first electrode arrangement (101) comprises a third sheet electrode (202) overlaying the substrate (103) on a side facing away from the first sheet electrode (104);
wherein the substrate (103) dielectrically separates the first sheet electrode (104) and the third sheet electrode (202) from each other;
wherein the first electrode arrangement (101) forms a second capacitor as the second sensor;
wherein the first sheet electrode (104) and the third sheet electrode (202) form a second capacitance of the second capacitor;
wherein the substrate (103) is arranged and designed such that the second capacitance is variable under the action of the fluid (111) and in function of a pressure of the fluid (111) as the second measurement variable.

9. The device (100) according to Claim 7 or 8, wherein the substrate (103) at least partially encloses a cavity (201) between the first sheet electrode (104) and the third sheet electrode (202).

10. A measurement means (602) comprising the device (100) according to any one of the preceding claims and a signal processor (601),
wherein the signal processor (601)
A) is arranged and designed for processing a measurement signal of the first measurement variable or of the second measurement variable or of both, and
B) is connected in a signal transmitting manner to the first sensor or to the second sensor or to both.

11. A sanitary facility (600) comprising the device (100) according to any one of Claims 1 to 9 or the measurement means (602) according to Claim 10.

12. A use of the device (100) according to any one of Claims 1 to 9 in a fluid line (109).

## Revendications

1. Un dispositif (100), comprenant
a) un premier capteur, conçu et placé pour recevoir une première grandeur de mesure d'un fluide (111), et
b) un deuxième capteur, conçu et placé pour recevoir une deuxième grandeur de mesure du fluide (111) ;
le dispositif
a. comprenant un premier arrangement d'électrodes (101), comprenan
i) un substrat (103), et
ii) une première électrode (106) plane, superposée au substrat (103)
b. un deuxième arrangement d'électrode (102), comprenant une deuxième électrode (105) plane ;
la première électrode (104) plane et la deuxième électrode (105) plane étant diélectriquement écartées l'une de l'autre ;
le premier arrangement d'électrode (101) et le deuxième arrangement d'électrode (102) formant un premier condensateur comme étant le premier capteur, de telle sorte qu'une première capacité formée par la première électrode (104) plane et la deuxième électrode (105) plane soit variable sous l'effet d'un fluide (111) et en fonction d'une vitesse d'écoulement du fluide (111) comme étant la première grandeur de mesure ;
**caractérisé en ce que**
le premier arrangement d'électrode (101) comprend le deuxième capteur.

2. Le dispositif (100) selon la revendication 1, le dispositif (100) étant conçu pour être placé dans une conduite de fluide (109) conçue pour diriger le fluide (111) .

3. Le dispositif (100) selon la revendication 2, la conduite de fluide (109) étant comprise dans un système sanitaire (600).

4. Le dispositif (100) selon l'une quelconque des revendications précédentes, la deuxième grandeur de mesure étant une température du fluide (111) ou une pression du fluide (111) ou les deux.

5. Le dispositif (100) selon l'une quelconque des revendications précédentes, le substrat (103) entourant au moins partiellement le deuxième capteur.

6. Le dispositif (100) selon l'une quelconque des revendications 1 à 4, sur un côté opposé à la première électrode (104) plane, au moins une piste conductrice électrique étant superposée au substrat (103) ;
le deuxième capteur
A. étant superposé au substrat (103) sur le côté opposé à la première électrode (104) plane, et
B. étant connecté de manière à conduire l'électricité avec l'au moins une piste conductrice.

7. Le dispositif (100) selon la revendication 5 ou 6, le dispositif (100) comprenant un troisième capteur, conçu et placé pour recevoir une troisième grandeur de mesure du fluide (111) ;
le premier arrangement d'électrode (101) comprenant une troisième électrode (202) plane, superposée au substrat (103) sur un côté opposé à la première électrode (104) plane ;
le substrat (103) écartant diélectriquement l'une de l'autre la première électrode (104) plane et la troisième électrode (202) plane ;
le premier arrangement d'électrode (101) formant un deuxième condensateur comme étant le troisième capteur ;
la première électrode (104) plane et la troisième électrode (202) plane formant une deuxième capacité du deuxième condensateur ;
le substrat (103) étant placé et conçu de telle sorte, que la deuxième capacité soit variable sous l'effet du fluide (111) et en fonction d'une pression du fluide (111) comme étant la troisième grandeur de mesure.

8. Le dispositif (100) selon l'une quelconque des revendications 1 à 4, le premier arrangement d'électrodes (101) comprenant une troisième électrode (202) plane superposée au substrat (103) sur un côté opposé à la première électrode (104) plane ;
le substrat (103) écartant diélectriquement l'une de l'autre la première électrode (104) plane et la troisième électrode (202) plane ;
le premier arrangement d'électrode (101) formant un deuxième condensateur comme étant le deuxième capteur ;
la première électrode (104) plane et la troisième électrode (202) plane formant une deuxième capacité du deuxième condensateur ;
le substrat (103) étant placé et conçu de telle sorte que la deuxième capacité soit variable sous l'effet du fluide (111) et en fonction d'une pression du fluide (111) comme étant la deuxième grandeur de mesure.

9. Le dispositif (100) selon la revendication 7 ou 8, le substrat (103) entourant au moins partiellement une cavité (201) entre la première électrode (104) plane et la troisième électrode (202) plane.

10. Un système de mesure (602), comprenant le dispositif (100) selon l'une quelconque des revendications précédentes et un système de traitement des signaux (601),
le système de traitement des signaux (601)
A) étant placé et conçu pour traiter un signal de mesure de la première grandeur de mesure ou de la deuxième grandeur de mesure ou des deux, et
B) étant connecté de manière à transmettre les signaux avec le premier capteur ou avec le deuxième capteur ou avec les deux.

11. Un système sanitaire (600), comprenant le dispositif (100) selon l'une quelconque des revendications 1 à 9, ou le système de mesure (602) selon la revendication 10.

12. Une utilisation du dispositif (100) selon l'une quelconque des revendications 1 à 9 dans une conduite de fluide (109).
